# EUROPÄISCHE PATENTANMELDUNG

(11) **EP 2 546 136 A2**
(43) Veröffentlichungstag der Anmeldung: **16.01.2013**
(21) Anmeldenummer: 12005013.3
(22) Anmeldetag: 06.07.2012
(51) Int. Cl.: B62M 9/10

(54) **Mehrfach-Ritzelanordnung für eine Fahrradschaltung mit kleinen Ritzeln sowie Adapter hierfür**

(30) Priorität: 13.07.2011 DE 102011107162
(71) Anmelder: SRAM Deutschland GmbH, 97424 Schweinfurt (DE)
(72) Erfinder: Braedt, Henrik, Dipl.-Ing., 97218 Gerbrunn (DE)

(57) **Zusammenfassung**

Die vorliegende Erfindung betrifft eine Mehrfach-Ritzelanordnung (10) mit einer Mehrzahl von Ritzeln (14₁-14₁₀) mit unterschiedlichen Zähnezahlen zur Montage an einer Hinterradachse eines Fahrrads, umfassend
- eine Ritzelbaugruppe (12), an der zumindest ein Teil der Mehrzahl der Ritzel (14₁-14₁₀) vorgesehen ist,
- einen mit der Ritzelbaugruppe (12) drehmomentübertragend verbundenen oder verbindbaren Antreiber (16), der zur Montage auf die Hinterradachse ausgebildet ist,
- einen Adapter (26), der mit dem Antreiber (16) über einen ersten Kopplungsabschnitt (30) verbunden oder verbindbar ist.

Dabei ist vorgesehen, dass der Adapter (26) den Antreiber (16) im axialen Bereich wenigstens eines Ritzels der Ritzelbaugruppe umgreift.

## Beschreibung

Die vorliegende Erfindung betrifft eine Mehrfach-Ritzelanordnung mit einer Mehrzahl von Ritzeln mit unterschiedlichen Zähnezahlen zur Montage an einer Hinterradachse eines Fahrrads. Die vorliegende Erfindung betrifft insbesondere eine Mehrfach-Ritzelanordnung, umfassend eine Ritzelbaugruppe, an der zumindest ein Teil der Mehrzahl der Ritzel vorgesehen ist, einen mit der Ritzelbaugruppe drehmomentübertragend verbundenen oder verbindbaren Antreiber, der zu Montage auf die Hinterradachse ausgebildet ist, und einen Adapter, der mit dem Antreiber koppelbar ist, wobei die Ritzelbaugruppe auch Ritzel umfassen kann, die einen kleineren Innendurchmesser oder Fußkreis als der Außendurchmesser des Antreibers aufweisen, und wobei die Ritzelbaugruppe im Bereich der durchmesserkleineren Ritzel über den Adapter mit dem Antreiber verbindbar ist. Die Erfindung betrifft ferner einen entsprechenden Antreiber sowie einen Adapter und schließlich eine Hinterradachsanordnung für ein Fahrrad.

Im Stand der Technik sind verschiedene Systeme zur Anbringung von Mehrfach-Ritzelanordnungen für Fahrradschaltungen an Hinterradachsen bekannt. Bei einem weit verbreiteten System ist ein Antreiber über eine Lageranordnung drehbar auf der Hinterradachse eines Fahrrads gelagert. Der Antreiber steht über eine Freilaufkupplung mit der Nabenhülse in drehmomentübertragendem Eingriff und lässt eine Drehmomentübertragung in der einen Drehrichtung (Antriebsrichtung) zu, wohingegen er in der anderen Richtung von der Nabenhülse drehentkoppelt ist, um einen Freilauf bereitzustellen. Üblicherweise wird ein derartiger Antreiber an seiner Außenumfangsfläche mit einer Keilnutverzahnung oder einem vergleichbaren Profil versehen, um hierauf einzelne Ritzel oder eine Baugruppe bestehend aus mehreren Ritzeln drehmomentübertragend anbringen zu können. Eine derartige Lösung ist beispielsweise im Stand der Technik in dem Dokument DE 199 15 436 A1 gezeigt. Vergleichbare Lösungen sind ferner in den Dokumenten JP 59-165293, GB 2 177 628 A oder EP 0 277 576 A2 gezeigt.

Eine weit verbreitete Lösung ist in dem Dokument EP 1 342 657 B1 beschrieben. Dieses Dokument wird als nächstkommender Stand der Technik für den Gegenstand des Anspruchs 1 angesehen. Es zeigt auch eine Möglichkeit, um durchmesserkleinere Ritzel an einem verhältnismäßig massiv ausgebildeten Antreiber anzubringen. Obgleich dieses System weit verbreitet ist, stößt es zunehmend an seine Grenzen und weist erhebliche Nachteile auf. So wird gerade bei hochentwickelten Fahrradschaltungen, wie sie zwischenzeitlich sowohl im professionellen Radsport als auch bei Freizeitsportlern eingesetzt werden, die Anzahl der Ritzel immer größer. Dabei kommen zum Teil relativ große Abstufungen aber insbesondere auch relativ enge Abstufungen zum Einsatz, um beispielsweise eine optimale Übersetzung beim Befahren von flachem Terrain oder bei Fahrten in der Gruppe mit konstanter Trittfrequenz zu ermöglichen. In beiden Fällen, d.h. dann, wenn enge Abstufungen mit kleinen Übersetzungssprüngen vorgesehen sind, oder dann, wenn große Übersetzungssprünge bereitgestellt werden sollen, besteht ein zunehmender Bedarf an sehr kleinen Ritzeln, d.h. Ritzeln mit 10 Zähnen oder weniger. Derartig kleine Ritzel lassen sich aber nicht mehr auf einem Antreiber der herkömmlichen Art montieren, so dass Hilfskonstruktionen erforderlich sind, die meist zusätzliche Teile benötigen und deshalb kompliziert aufgebaut sowie schwer zu montieren sind. Gerade für die durchmesserkleineren Ritzel sind verhältnismäßig aufwändige Mitnahmeprofile erforderlich. Insgesamt ergibt sich gerade bei der in diesem Stand der Technik gezeigten Adapterlösung das Problem, dass eine Vielzahl von verschiedenen Teilen erforderlich ist, die kompliziert zu montieren sind und verhältnismäßig viel Gewicht mit sich bringen.

Ein weiterer Nachteil dieser Lösung aus dem Stand der Technik besteht auch darin, dass gerade wegen der mehrteiligen Anordnung das äußere Lager in axialer Richtung weiter innen im Inneren des Antreibers angeordnet werden muss. Dies bedeutet, dass gerade dann, wenn die Kette auf dem kleinsten Ritzel aufliegt, ein verhältnismäßig großer axialer Abstand zwischen dem Ort des Ketteneingriffs und damit dem Ort der Kraftübertragung und dem Lager besteht. Dadurch kommt es zu unerwünschten mechanischen Spannungszuständen und zu einem ungünstigen Kraftfluss.

Es ist eine Aufgabe der vorliegenden Erfindung, eine Mehrfach-Ritzelanordnung der eingangs bezeichneten Art, einen Adapter sowie einen Antreiber und eine hiermit ausgebildete Hinterrad-Achsanordnung bereitzustellen, die den vorstehend geschilderten Problemen Rechnung tragen und die bei erheblich vereinfachtem Aufbau mit deutlich reduziertem Gewicht ausgebildet werden können.

Diese Aufgabe wird durch eine Mehrfach-Ritzelanordnung der eingangs bezeichneten Art gelöst, bei der vorgesehen ist, dass der Adapter den Antreiber im axialen Bereich wenigstens eines Ritzels der Ritzelbaugruppe insbesondere zur axialen Fixierung umgreift.

Anders als beim Stand der Technik, bei dem sämtliche Ritzel in der Regel mittelbar oder unmittelbar über ein entsprechendes Außenverzahnungsprofil am Antreiber angreifen, wurde bei der vorliegenden Erfindung erkannt, dass nicht der gesamte Antreiber mit einer entsprechenden Außenverzahnung versehen werden muss, sondern dass auch Abschnitte im Außenbereich des Antreibers dazu genutzt werden können, um den Adapter zur Anbringung der Ritzelbaugruppe zumindest axial zu fixieren. Die Drehmomentübertragung zwischen Ritzelbaugruppe und Antreiber kann auch räumlich getrennt von dem Kopplungsabschnitt erfolgen. Der Adapter dient vorzugsweise allein zur Fixierung der Ritzelbaugruppe in axialer und radialer Richtung. Dies hat den Vorteil, dass die zur Drehmomentübertragung genutzten Abschnitte der Ritzelbaugruppe speziell hierauf ausgelegt werden können und die zur axialen und radialen Fixierung über den Adapter genutzten Abschnitte entsprechend auf die Anforderungen bei der axialen Fixierung abgestimmt werden können.

Darüber hinaus steigt die Variabilität für die Verwendung verschiedener Ritzelbaugruppen durch die jeweilige Anpassung des Adapters. Eine entsprechende Ritzelbaugruppe braucht nur noch mit dem geeigneten Drehmomentübertragungsabschnitt versehen werden und kann dann mit einem entsprechend auf die Ritzelbaugruppe abgestimmten Adapter axial fixiert werden, wobei der Adapter am ersten Kopplungsabschnitt des Antreibers angreift. Dies erlaubt es, auch Ritzelbaugruppen mit sehr kleinen Ritzeln zu verwenden, die mit herkömmlichen Antreibern überhaupt nicht oder nur unter erheblichem technischem Aufwand kombiniert werden können.

Eine Weiterbildung der Erfindung sieht vor, dass die Ritzelbaugruppe als zusammenhängende Baugruppe vormontierbar und über den Adapter mit dem Antreiber verspannbar ist, wobei der Adapter mit dem ersten Kopplungsabschnitt ausgebildet ist, über den er an dem Antreiber anbringbar ist, und mit einem zweiten Kopplungsabschnitt ausgebildet ist, mit dem er mit der vormontierten Ritzelbaugruppe gekoppelt oder koppelbar ist.

In Abweichung vom Stand der Technik hat diese erfindungsgemäße Weiterbildung den wesentlichen Vorteil, dass die Ritzelbaugruppe als zusammenhängende Baugruppe vormontierbar und somit bei der Montage als Ganzes einfacher handhabbar ist. Auch dadurch lässt sich der Adapter erheblich vereinfachen. Der Adapter kann dann so ausgestaltet werden, dass er nicht einzelne Ritzel oder eine Unterbaugruppe von einzelnen Ritzeln aufnehmen und tragend lagern muss. Stattdessen ist der Adapter so ausgeführt, dass er lediglich die Funktion der vornehmlich axialen (und radialen) Fixierung der Ritzelbaugruppe an dem Antreiber gewährleistet. Dadurch ist es möglich, eine Ritzelbaugruppe herzustellen, die mit einem herkömmlichen Antreiber, wie er bereits weit verbreitet ist, zusammenwirkt, wobei diese Ritzelbaugruppe auch mit sehr kleinen Ritzeln mit geringen Zähnezahlen ausgeführt sein kann. Da die Ritzelbaugruppe sozusagen selbsttragend ist, muss sie nicht zusätzlich über den Adapter relativ zum Antreiber gestützt werden, wie dies beim Stand der Technik bei Systemen der Fall ist, die das Zusammensetzen und Fixieren einzelner Ritzel oder Ritzelgruppen erfordern. Es versteht sich, dass im Rahmen der Erfindung vorteilhafterweise speziell auf den Adapter abgestimmte Antreiber gegenüber herkömmlichen Antreiber bevorzugt zum Einsatz kommen.

Auch die Drehmomentübertragung von der Ritzelbaugruppe auf den Antreiber kann wesentlich einfacher gestaltet werden, als dies bei einer vielteiligen Lösung mit zum Teil einzelnen Ritzeln der Fall ist. Der Adapter kann also funktional genau auf die singuläre Funktion der Positionierung und Fixierung der Ritzelbaugruppe in axialer Richtung und in radialer Richtung relativ zum Antreiber ausgelegt werden, was eine Gewichtsoptimierung zulässt. So kann der Adapter oder diesem zugeordnete Komponenten beispielsweise mit Passungsflächen versehen sein, die die Ritzelbaugruppe relativ zum Antreiber in axialer und/oder radialer Richtung in definierter Stellung positionieren. Auch können Konizitäten am Adapter ausgebildet sein, die eine Zentrierung und Verspannung beim Festschrauben des Adapters gewährleisten. Die Drehmomentübertragung zwischen Ritzelbaugruppe und Antreiber kann unabhängig vom Adapter an einer anderen Stelle der Ritzelbaugruppe erfolgen.

Unterschiedliche Funktionen, wie sie beim Stand der Technik gemäß EP 1 342 657 B1 vom Adapter oder von auf diesem angebrachten komplexen Zwischenritzeln übernommen werden, nämlich die Positionierung und drehmomentübertragende Aufnahme von Einzelritzein kleineren Durchmessers, fällt bei der vorliegenden Erfindung weg. Insgesamt ergibt sich ein erheblich vereinfachtes und hinsichtlich der Gewichtseinsparung deutlich optimiertes System.

Eine Ausführungsvariante der Erfindung sieht vor, dass der Adapter in Form einer gestuften Rohrhülse mit einem ersten Durchmesserabschnitt mit einem ersten Außendurchmesser und einem zweiten Durchmesserabschnitt mit einem gegenüber dem ersten Außendurchmesser reduzierten zweiten Außendurchmesser ausgebildet ist. Dabei sind der erste Durchmesserabschnitt auf den Durchmesser des Antreibers und der zweite Durchmesserabschnitt auf die durchmesserkleineren Bereiche der Ritzelbaugruppe abgestimmt. Eine massive, schwere Ausgestaltung des Adapters kann dadurch vermieden werden.

Vorzugsweise kann bei dieser Ausführungsvariante der Erfindung vorgesehen sein, dass der erste Kopplungsabschnitt des Adapters an dessen erstem Durchmesserabschnitt ausgebildet ist. Dabei ist es erfindungsgemäß möglich, dass der erste Kopplungsabschnitt in Form einer Gewindeformation, vorzugsweise einer Innengewindeformation, ausgebildet ist, die mit einer korrespondierenden Gegengewindeformation am Antreiber in Eingriff bringbar ist. Der Adapter ist also auf den Antreiber über entsprechende Gewindeformationen aufschraubbar. Dies erlaubt eine einfache Montage bei zuverlässigem dauerhaftem Halt.

In diesem Zusammenhang kann erfindungsgemäß ferner vorgesehen sein, dass der Antreiber und der Adapter jeweils eine Anlagefläche aufweisen, die bei gegenseitiger Anlage im montierten Zustand eine vorgegebene Relativposition in axialer Richtung oder/und in radialer Richtung (Zentrierung) zwischen Antreiber und Adapter definieren.

Ferner kann bei dieser Ausführungsvariante der Erfindung vorgesehen sein, dass der zweite Kopplungsabschnitt in Form einer Gewindeformation, vorzugsweise einer Außengewindeformation, ausgebildet ist, über die die Mehrfach-Ritzelanordnung mit dem Adapter verspannbar ist. Die Verspannung kann beispielsweise über eine zusätzliche Mutter erfolgen, die auf die Außengewindeformation am zweiten Kopplungsabschnitt des Adapters aufschraubbar ist und zur axialen Positionierung und Verspannung an der Ritzelbaugruppe angreift. Dabei kann vorgesehen sein, dass der zweite Kopplungsabschnitt am zweiten Durchmesserabschnitt des Adapters angeordnet ist.

Alternativ zu einer Verschraubung zwischen dem Adapter und der Ritzelbaugruppe ist es auch möglich, den Adapter unmittelbar der Ritzelbaugruppe zuzuordnen, beispielsweise an dieser durch Reibschluss oder Formschluss anzubringen. In diesem Zusammenhang sieht eine bevorzugte Ausführungsvariante der Erfindung vor, dass der zweite Kopplungsabschnitt in Form wenigstens eines Haltevorsprungs ausgebildet ist, der in Eingriff mit einer korrespondierenden Halteformation an der Ritzelbaugruppe bringbar ist. Der Adapter wird also durch eine Art Verrastung an der Ritzelbaugruppe angebracht. Das Zusammenwirken zwischen Haltevorsprung und Halteformation lässt sich über eine Hinterschneidung realisieren. Diese Ausführungsvariante hat mehrere Vorteile. Zum einen muss die Ritzelbaugruppe nicht mehr mit einer zusätzlichen Mutter am kleinsten Ritzel axial verspannt werden. Es ist darauf hinzuweisen, dass beim Stand der Technik bei einer axialen Verspannung am kleinsten Ritzel relativ hohe Anpresskräfte wirken können, weshalb die gesamte Ritzelbaugruppe oder Teile davon relativ massiv und damit schwer ausgebildet werden müssen. Durch das Zusammenwirken zwischen Haltevorsprung und Halteformation über eine Hinterschneidung lässt sich die Ritzelbaugruppe besser dimensionieren und muss insbesondere nur dort entsprechend stabil ausgelegt werden, wo tatsächlich die Spannkräfte einwirken, d.h. im Bereich der Halteformation.

In diesem Zusammenhang kann vorgesehen sein, dass der Haltevorsprung an einem axialen Ende des Adapters angeordnet ist, wobei der Adapter an diesem axialen Ende zur Ausbildung von Rastlaschen mehrfach axial geschlitzt ist. Dadurch ist es möglich, den Adapter sozusagen in die Ritzelbaugruppe hinein zu stecken und dort zu Verrasten, wobei während der Verrastung die Rastlaschen wegen der axialen Schlitzung elastisch radial einwärts federn können und dann die Halteformation verrastend hintergreifen. Mit anderen Worten kann vorgesehen sein, dass die Rastlaschen zum Einrasten in die Halteformation ausgebildet sind. Das Einrasten kann dadurch unterstützt werden, dass die Haltelaschen mit Fasen zur Schaffung entsprechender Einlaufschrägen versehen sind.

Um den Adapter montieren zu können, sieht eine Weiterbildung der Erfindung vor, dass dieser eine Angriffsformation aufweist, die zum Übertragen eines Drehmoments zu Montagezwecken ausgebildet ist. In diesem Zusammenhang ist es möglich, dass die Angriffsformation unmittelbar am Adapter oder an einem mit dem Adapter drehmomentübertragend koppelbaren Montagering vorgesehen ist. Gemäß der ersten Alternative können also eine radiale Verzahnung oder eine Stirnverzahnung oder ein anderweitiges mechanisches Angriffsprofil direkt am Adapter ausgebildet sein. In beiden Fällen kann ein Montagewerkzeug mit der jeweiligen Angriffsformation in Eingriff gebracht werden.

Im Falle eines separaten Montagerings kann dieser mit radialen Vorsprüngen versehen sein, die drehmomentübertragend in die Axialschlitze zwischen die Rastlaschen eingreifen. Der Montagering wird somit drehmomentübertragend mit dem Adapter gekoppelt.

Hinsichtlich des Montagerings ist es erfindungsgemäß ferner möglich, dass dieser mit Anlageflächen zum radialen und/oder axialen Positionieren der Ritzelbaugruppe relativ zum Antreiber versehen ist. In Abweichung von den vorangehend beschriebenen Ausführungsformen kann also die radiale und/oder axiale Positionierung der Ritzelbaugruppe vollständig oder teilweise auch vom Montagering übernommen werden.

Eine Weiterbildung der Erfindung sieht vor, dass die Ritzelbaugruppe mit einem Stützring versehen ist, der zur Drehmomentübertragung zwischen der Ritzelbaugruppe und dem Antreiber drehmomentübertragend mit dem Antreiber gekoppelt ist. So kann speziell dieser Stützring entsprechend massiv ausgebildet werden, um den Anforderungen der Drehmomentübertragung auf den Antreiber gerecht zu werden. Der Rest der Ritzelbaugruppe kann dann entsprechend leichter ausgebildet werden. An dem Stützring können dann ein oder mehrere Abschlussritzel ausgebildet oder angebracht sein.

Erfindungsgemäß kann ferner ein rohrförmiges Spannelement vorgesehen sein, das als axialer Anschlag zwischen dem Stützring der Ritzelbaugruppe und dem Adapter oder/und der Ritzelbaugruppe ausgebildet ist. Dieses rohrförmige Spannelement dient in bestimmten Ausführungsformen sozusagen als axialer Anschlag für den Adapter oder für die Ritzelbaugruppe während der Verspannung mit dem Antreiber. Dadurch kann vermieden werden, dass die Ritzelbaugruppe selbst zu stark verspannt und dabei unerwünscht deformiert wird.

Gemäß einer alternativen Ausführungsform der Erfindung, die mit den vorstehend beschriebenen Möglichkeiten zur Weiterbildung kombinierbar ist, kann ferner vorgesehen sein, dass der Adapter wenigstens ein in dem Antreiber aufgenommenes Lager umgreift. Dabei kann das Lager auch in den Adapter eingesetzt sein, wobei der Adapter mit einem Außengewinde dann in den Antreiber hinein oder mit einem Innengewinde auf diesen aufgeschraubt wird.

Die Erfindung betrifft ferner einen Adapter zum Anbringen einer Ritzelbaugruppe an einem Antreiber einer Mehrfach-Ritzelanordnung gemäß der vorstehenden Beschreibung, wobei der Adapter mit einem ersten Kopplungsabschnitt ausgebildet ist, über den er an dem Antreiber anbringbar ist, und mit einem zweiten Kopplungsabschnitt ausgebildet ist, mit dem er mit der Ritzelbaugruppe gekoppelt oder koppelbar ist. Der Adapter kann einzelne, Kombinationen oder sämtliche adapterspezifischen Merkmale aufweisen, die vorstehend erläutert wurden. Insbesondere ist es möglich, dass der zweite Kopplungsabschnitt an einem mehrfach axial geschlitzten Ende des Adapters ausgebildet ist. Ferner ist es, wie vorstehend bereits ausgeführt, möglich, dass der Adapter eine Angriffsformation aufweist oder mit einer Eingriffsformation drehmomentübertragend gekoppelt ist, die zum drehmomentübertragenden Anbringen eines Montagewerkzeugs ausgebildet ist.

Die Erfindung betrifft ferner einen Antreiber zum Aufnehmen einer Ritzelbaugruppe einer Mehrfach-Ritzelanordnung der vorstehend beschriebenen Art, umfassend eine Drehmomentaufnahmeformation zur drehmomentübertragenden Kopplung mit der Ritzelbaugruppe, eine Abtriebsformation zum Übertragen des Drehmoments auf eine Nabenanordnung einer Hinterradachse eines Fahrrads sowie einen Aufnahmeabschnitt zum drehmomentübertragenden Aufnehmen der Ritzelbaugruppe, wobei der Antreiber mit einer Gegengewindeformation ausgebildet ist, auf die ein Adapter der vorstehend beschriebenen Art mit einer korrespondierenden Gewindeformation aufschraubbar ist. Auch der Antreiber kann einzelne, Kombinationen oder sämtliche antreiberspezifischen Merkmale aufweisen, die vorstehend erläutert wurden.

Schließlich betrifft die Erfindung eine Hinterrad-Achsanordnung für ein Fahrrad mit einer Hinterradachse, die zur Befestigung an einem Fahrradrahmen ausgebildet ist, einen auf der Hinterachse drehbar gelagerten Nabenkörper, eine mit einer Antriebskette zusammenwirkenden Mehrfach-Ritzelanordnung der vorstehend beschriebenen Art, und eine Drehmomentübertragungsanordnung, beispielsweise einen Freilauf, zum richtungsselektiven Übertragen eines Drehmoments von der Mehrfach-Ritzelanordnung zu dem Nabenkörper, um den Nabenkörper anzutreiben, wobei die Mehrfach-Ritzelanordnung auf der Hinterradachse drehbar gelagert ist.

Die Erfindung wird im Folgenden beispielhaft anhand der beiliegenden Figuren erläutert. Es stellen dar:
- Fig. 1: eine achsenthaltende Schnittansicht einer ersten Ausführungsvariante einer erfindungsgemäßen Hinterrad-Achsanordnung mit einer erfindungsgemäßen Mehrfach-Ritzelanordnung;
- Fig. 2: eine entsprechende Schnittansicht des Adapters;
- Fig. 3: eine entsprechende achsenthaltende Schnittansicht des Antreibers;
- Fig. 4: eine räumliche Ansicht des Antreibers in Einzelteildarstellung;
- Fig. 5: eine achsenthaltende Schnittansicht einer zweiten Ausführungsvariante der erfindungsgemäßen Hinterrad-Achsanordnung mit einer erfindungsgemäßen Mehrfach-Ritzelanordnung;
- Fig. 6: eine entsprechende achsenthaltende Schnittansicht des Adapters der zweiten Ausführungsvariante;
- Fig. 7: eine räumliche Ansicht des Adapters der zweiten Ausführungsvariante;
- Fig. 8: eine entsprechende achsenthaltende Schnittansicht des Antreibers der zweiten Ausführungsvariante;
- Fig. 9: eine räumliche Ansicht des Antreibers der zweiten Ausführungsvariante in Einzelteildarstellung;
- Fig. 10: eine achsenthaltende Teilschnittansicht einer dritten Ausführungsvariante der erfindungsgemäßen Hinterrad-Achsanordnung mit einer erfindungsgemäßen Mehrfach-Ritzelanordnung;
- Fig. 11: eine entsprechende achsenthaltende Schnittansicht des Adapters der dritten Ausführungsvariante;
- Fig. 12: eine entsprechende achsenthaltende Schnittansicht eines Montagerings der dritten Ausführungsvariante;
- Fig. 13: eine Vorderansicht des Montagerings der dritten Ausführungsvariante; und

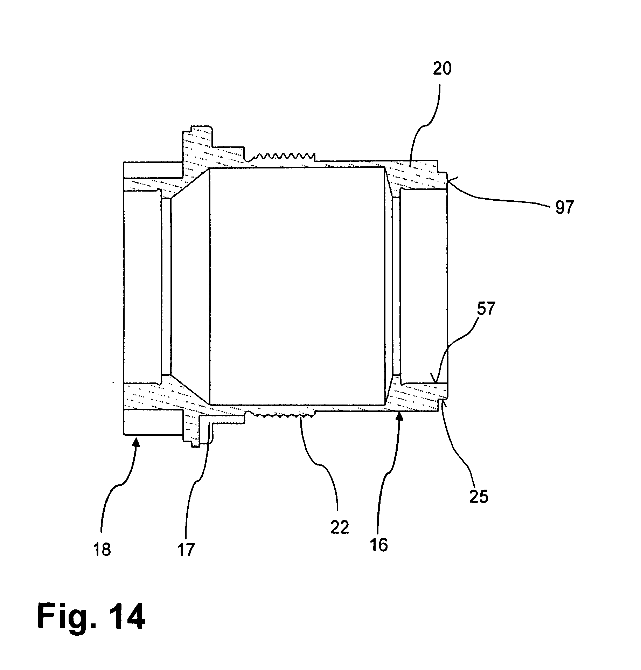

- Fig. 14: eine achsenthaltende Schnittansicht des Antreibers der dritten Ausführungsvariante.

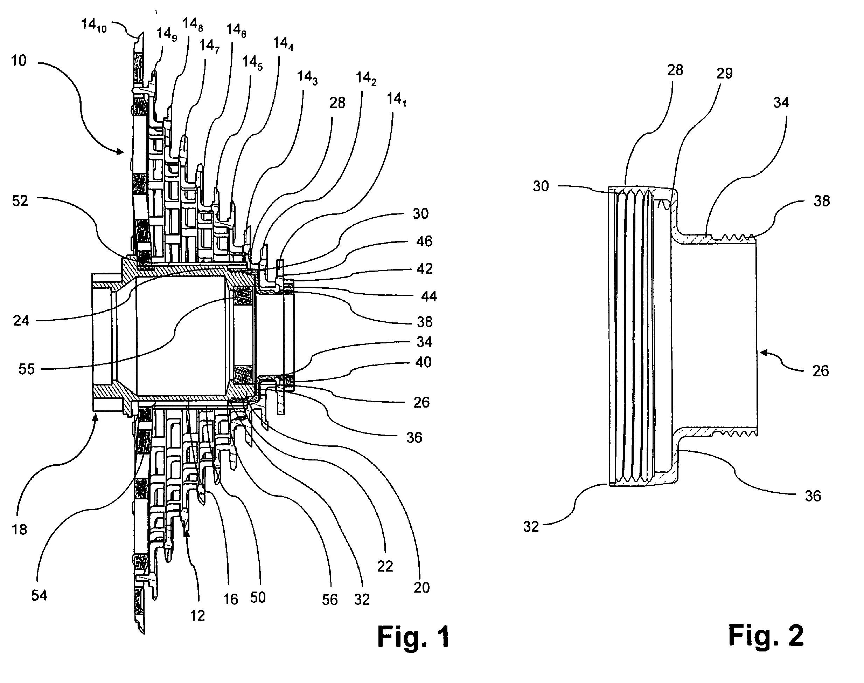

In Fig. 1 ist eine erfindungsgemäße Mehrfach-Ritzelanordnung im achsenthaltenden Schnitt gezeigt und allgemein mit 10 bezeichnet. Diese umfasst eine Ritzelbaugruppe 12, an der mehrere Ritzel 14₁ bis 14₁₀ mit unterschiedlichen Durchmessern und unterschiedlichen Zähnezahlen ausgebildet sind. Die Ritzelbaugruppe 12 ist einstückig ausgebildet bzw. als zusammenhängende Baugruppe, die als eine Komponente während der Montage gehandhabt werden kann. Auch wenn die Ritzelbaugruppe 12 selbst aus mehreren Einzelteilen bestehen kann, so hängen diese nach der Montage fest zusammen und bilden sozusagen eine selbsttragende Einheit.

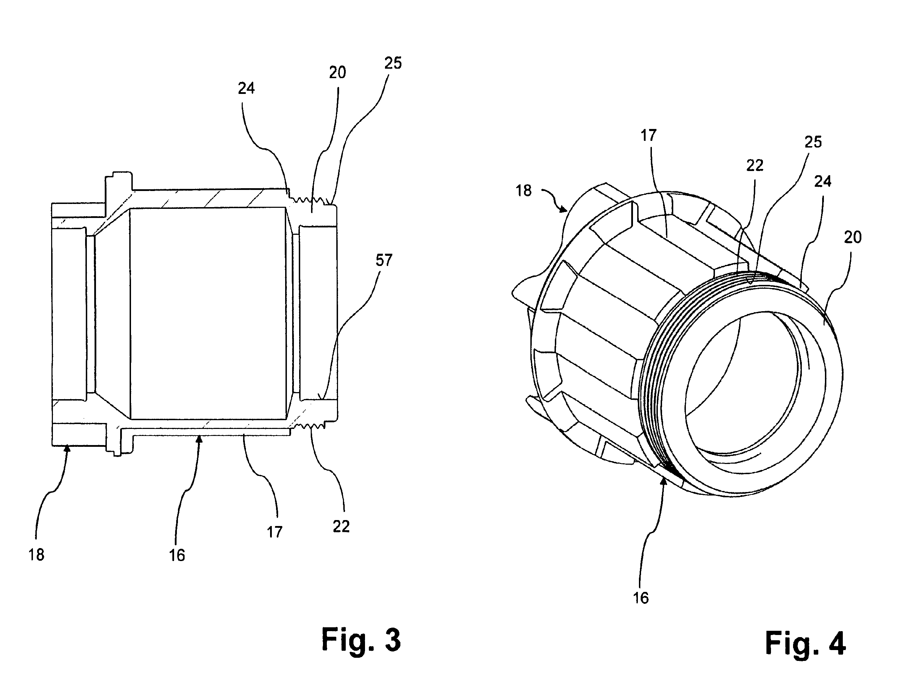

Die Ritzelbaugruppe 12 ist auf einem Antreiber 16 angebracht, der in der Einzelteildarstellung in den Figuren 3 und 4 gezeigt ist. Dieser Antreiber 16 lässt sich in an sich bekannter Weise auf einer nicht gezeigten Hinterradachse eines Fahrrads anbringen. In einem Bereich 18 lässt sich eine Anordnung zur Übertragung des Drehmoments von dem Antreiber 16 bzw. der Ritzelbaugruppe 12 auf eine Freilaufeinrichtung und von dieser auf einen Nabenkörper (beides nicht gezeigt) einer Hinterradachsanordnung anbringen. Der Antreiber 16 kann in herkömmlicher Weise ausgeführt sein und insbesondere Vorkehrungen aufweisen, um zu bereits bekannten, am Markt verbreiteten herkömmlichen Systemen kompatibel zu sein. Insbesondere weist der Antreiber 16 eine Außenverzahnung 17 zur drehmomentübertragenden Aufnahme der Ritzelbaugruppe 12 auf.

An seinem in Figur 1 rechten Ende ist der Antreiber 16 mit einem in seinem Außendurchmesser reduzierten Abschnitt 20 versehen. An diesem Abschnitt ist eine Außengewindeformation 22 vorgesehen, die in einer Schulter 24 mit einer als Passfläche ausgebildeten Außenumfangsfläche 25 endet. Auf diesen in seinem Außendurchmesser reduzierten Abschnitt 20 ist im montierten Zustand ein hülsenförmiger Adapter 26 aufgeschraubt, der in Einzelteildarstellung im Schnitt in Figur 2 gezeigt ist. Hierzu weist der Adapter 26 einen ersten Abschnitt 28 mit einem großen Durchmesser auf, an dem eine Innengewindeformation 30 ausgebildet ist. An diese Innengewindeformation 30 schließt sich eine Innenumfangsfläche 29 an, die als Passfläche ausgebildet ist und mit der korrespondierenden Passfläche 25 am Antreiber 16 zur radialen Positionierung des Adapters 26 relativ zum Antreiber 16 ausgebildet ist.

Der erste Abschnitt 28 endet in einer Stirnfläche 32, die in dem in Figur 1 gezeigten montierten Zustand in definierter Anlage mit der Schulter 24 steht und so die axiale Position des Adapters 26 relativ zu dem Antreiber 16 bestimmt. Der Adapter 26 weist ferner einen zweiten Abschnitt 34 auf, der einen kleineren Durchmesser besitzt, als der erste Abschnitt 28. Die beiden Abschnitte 28 und 34 sind über einen Übergangsabschnitt 36 miteinander verbunden.

An dem durchmesserkleineren Abschnitt 34 ist eine Außengewindeformation 38 vorgesehen. Auf diese ist im montierten Zustand gemäß Figur 1 eine Spannmutter 40 aufgeschraubt. Die Spannmutter 40 weist an ihrer Außenumfangsfläche mehrere Ausnehmungen 42 auf, an denen ein Werkzeug angreifen kann, um während der Montage auf die Spannmutter 40 zum Verspannen ein Drehmoment auszuüben. Die Spannmutter 40 liegt mit einer seitlichen Anlagefläche 44 an einer ihr zugewandten axialen Endfläche 46 der Ritzelbaugruppe 12 an. Durch Anziehen der Spannmutter 40 kann die Ritzelbaugruppe 12 in axialer Richtung positioniert und verspannt werden.

In Figur 1 erkennt man ferner ein Rohrelement 50, das sich mit einem Ende 52 an einem Stützring 54 der Ritzelbaugruppe 12 axial abstützt und mit einem anderen Ende 56 innerhalb der Ritzelbaugruppe 12 an einem der kleineren Ritzel, nämlich an dem Ritzel 14₂. Der durch das Festziehen der Mutter 40 aufgebrachte Kraftfluss in axialer Richtung erstreckt sich also über die beiden kleinen Ritzel 14₁ und 14₂, das Rohrelement 50 auf den Stützring 54 und von diesem auf den Antreiber 16.

Festzuhalten ist, dass sich die Ritzelbaugruppe 12 aus dem separaten Stützring 54, an dem das größte Ritzel 14₁₀ integral ausgebildet ist, und einer Unterbaugruppe der verbleibenden Ritzel 14₁ bis 14₉, sowie dem Rohrelement 50 zusammensetzt, das vor Anbringung des Stützrings 54 eingesetzt wird. Wie bereits ausgeführt wird der Stützring 54 fest mit der Unterbaugruppe der verbleibenden Ritzel 14₁ bis 14₉ verbunden, beispielsweise durch Verpressen, Vernieten, Verkleben oder dergleichen. Der Stützring 54 weist als Drehmomentübertragungsabschnitt eine Innenverzahnung auf, die zu der Außenverzahnung 17 des Antreibers 16 korrespondiert, und dient zur Drehmomentübertragung zwischen Ritzelbaugruppe 12 und Antreiber 16.

Schließlich zeigt Figur 1 auch noch das Lager 55, das in dem Antreiber 16 in einer hierfür ausgebildeten Lagerausnehmung mit einer Passfläche 57 passgenau angeordnet ist und zur Lagerung des Antreibers 16 auf der nicht gezeigten des Hinterradachse vorgesehen ist.

Die Montage des gesamten Systems ist relativ einfach. Auf den Antreiber 16 wird der in Figur 1 gezeigte Adapter 26 aufgeschraubt und fixiert. Sodann wird die Ritzelbaugruppe 12 auf den Antreiber 16 aufgesteckt. Schließlich wird die Spannmutter 40 aufgeschraubt und so weit fest gezogen, bis das Rohrelement 50 sozusagen als definierter Anschlag dient.

Insgesamt ergibt sich also ein gegenüber dem Stand der Technik erheblich vereinfachtes System, das wesentlich leichter ausgebildet werden kann, als beispielsweise das komplexe mehrteilige System gemäß dem nächstkommenden Stand der Technik. Dieses System lässt sich aber mit bestehenden, seit langem Einsatz befindenden Antreiberlösungen kombinieren, so dass auf derartige Antreiber gemäß dem Stand der Technik auch Ritzelbaugruppen mit Ritzeln mit sehr geringen Zähnezahlen aufgesetzt werden können.

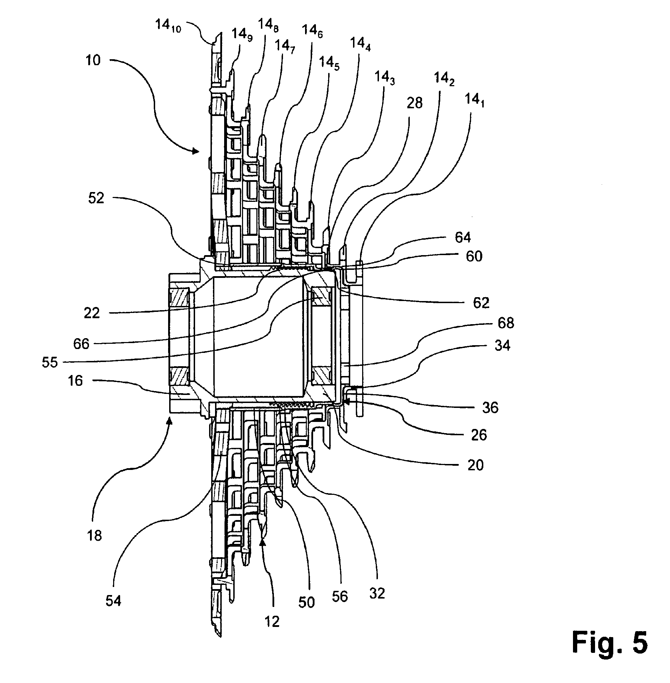

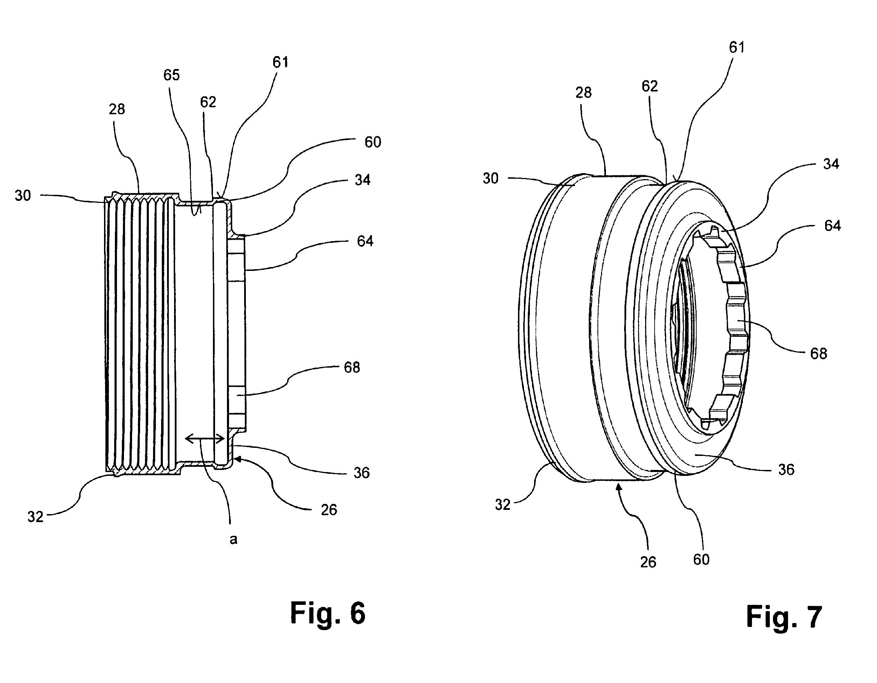

Figuren 5 bis 9 zeigen eine zweite Ausführungsform der Erfindung. Zur Vermeidung von Wiederholungen werden für gleichartige oder gleichwirkende Komponenten dieselben Bezugszeichen verwendet, wie bei der ersten Ausführungsform. Im Folgenden soll lediglich auf die Unterschiede zur ersten Ausführungsform eingegangen werden.

Wiederum erkennt man, dass an dem Antreiber 16 eine Außengewindeformation 22 angebracht ist. An diese Außengewindeformation 22 schließt sich noch ein gewindefreier Abschnitt 20 an. Der Adapter 26 ist wiederum mit einem Abschnitt 28 versehen, an dem eine Innengewindeformation 38 vorgesehen ist. Anders als bei der ersten Ausführungsvariante gemäß Figur 1 stützt sich der Adapter 26 mit seiner Stirnfläche 32 in axialer Richtung nicht am Antreiber 16 ab, sondern am Rohrelement 50 (siehe Figur 5).

Ein weiterer Unterschied zwischen der ersten Ausführungsform gemäß Figur 1 und der zweiten Ausführungsform gemäß Figur 2 liegt darin, wie der Adapter 26 mit der Ritzelbaugruppe 12 gekoppelt ist. Der Adapter 26 weist einen im Durchmesser erweiterten Abschnitt 60 mit einer Außenumfangsfläche 61 zur radialen Positionierung und einer schulterartigen Anlagefläche 62 auf. Dieser Abschnitt 60 greift in eine radiale Ausnehmung 64 in der Ritzelbaugruppe 12 ein, die sozusagen einen Hinterschnitt bildet. Die Anlagefläche 62 liegt an einer korrespondierenden Gegenanlagefläche 66 an und sorgt dafür, dass die Ritzelbaugruppe 12 im montierten Zustand in axialer Richtung nicht über die Anlagefläche 62 abrutschen kann. An dieser Stelle wirken bei der Verspannung der Ritzelbaugruppe 12 mit dem Antreiber die Spannkräfte. Dies ist für den Kraftfluss besser, als beim Stand der Technik, bei dem die Ritzelbaugruppe am kleinsten Ritzel mit einem Spannelement auf den Antreiber aufgespannt wird, was zu einer ungünstigen Einwirkung von zum Teil hohen Spannkräften gerade am kleinsten Ritzel führt. Es ist anzumerken, dass der Adapter 26 in dieser radialen Ausnehmung 64 nicht eingepresst ist, sondern mit geringem Spiel darin aufgenommen, so dass sich der Adapter 26 relativ zu der Ritzelbaugruppe 12 verdrehen lässt.

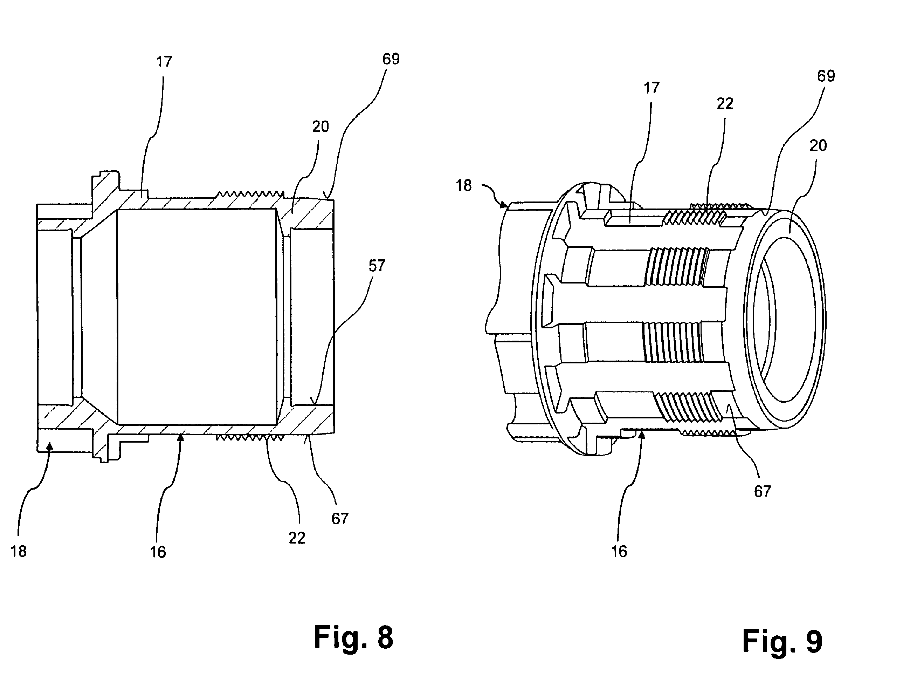

Die zur Erhöhung der Elastizität des Adapters im Abstand a zu der Passfläche 61 angeordnete Innenumfangsfläche 65 wirkt mit einer korrespondierenden Außenumfangsfläche 67 (siehe Figur 8) zur radialen Positionierung zusammen. Der Außenumfangsfläche 67 ist eine leichte Konizität 69 vorgeordnet.

Ein zusätzlicher Unterschied zu der ersten Ausführungsform besteht bei der zweiten Ausführungsform gemäß Figuren 5 bis 9 darin, dass der Adapter 26 an seinem (durchmesserkleineren) Abschnitt 34 keine Außengewindeformation mehr besitzt, weil eine zusätzliche Spannmutter nicht mehr erforderlich ist. Allerdings weist der Adapter 26 an seinem durchmesserkleineren Abschnitt 34 radial einwärts stehende Vorsprünge 68 auf, an denen ein Werkzeug zu Montagezwecken drehmomentübertragend angreifen kann.

Bei dieser Ausführungsvariante umfasst die Ritzelbaugruppe den zur Drehmomentübertragung zu dem Antreiber ausgebildeten Stützring 54 mit seinem integral ausgebildeten größten Ritzel 14₁₀ (Abschlußritzel), die Unterbaugruppe aus den Ritzeln 14₁ bis 14₉, das vorab eingebrachte Rohrelement 50 und den vorab eingebrachten Adapter 26. Diese Anordnung wird auf den Antreiber 16 aufgesteckt und durch Aufschrauben des Adapters 26 mit seiner Innengewindeformation 38 auf die Außengewindeformation 30 des Antreibers 16 fixiert. Bei diesem Aufschrauben dreht sich der Adapter 26 relativ zur Unterbaugruppe aus den Ritzeln 14₁ bis 14₉.

Es ergibt sich also ein verhältnismäßig einfacher, leichter und insbesondere denkbar einfach zu montierender Aufbau. Beide Ausführungsvarianten haben den Vorteil, dass sich eine Ritzelbaugruppe mit sehr kleinen Ritzeln und damit geringen Zähnezahlen verwenden lässt. Die zweite Ausführungsvariante gemäß den Figuren 5 bis 9 hat die weiteren Vorteile, dass die Verwendung einer zusätzlichen Spannmutter nicht mehr erforderlich ist. Dies macht es möglich, dass am kleinsten Ritzel keine Anpresskräfte mehr einwirken, die dessen Elastizität bei der Kraftübertragung von der Kette beeinträchtigen könnten. Außerdem können durch Weglassung der Spannmutter damit verbundene praktische Nachteile vermieden werden, wie etwa das Erfordernis von zusätzlichem Bauraum für die Spannmutter. Darüber hinaus können eine unerwünschte Wechselwirkung eines in das Außenprofil der Spannmutter eingesteckten Montagewerkzeugs mit den Zähnen des Ritzels während der Montage oder im Betrieb eine unerwünschte Wechselwirkung des Außenprofils der Spannmutter mit der auf dem kleinsten Ritzel aufliegenden Kette vermieden werden.

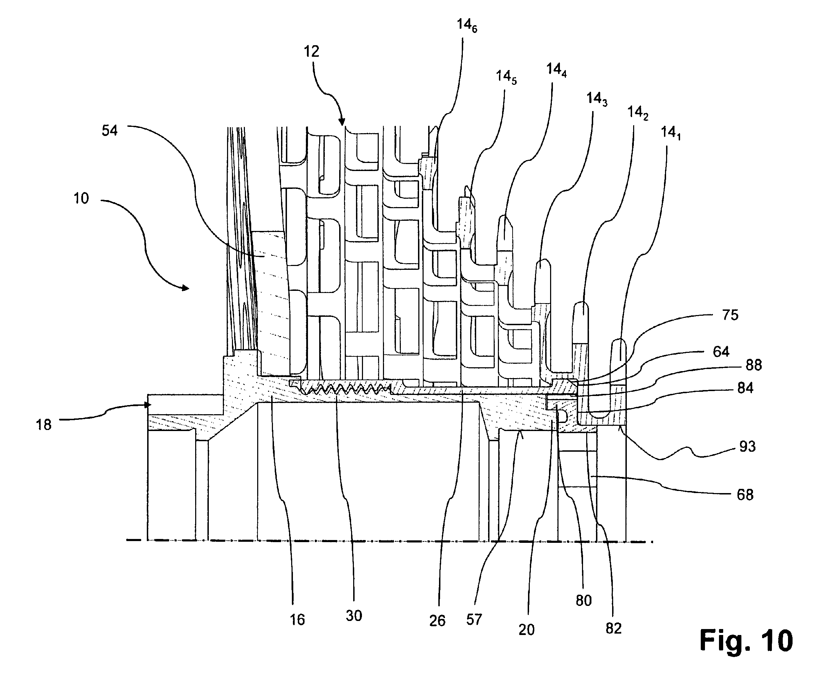

In den Figuren 10 bis 13 ist eine weitere Ausführungsvariante dargestellt, die sich an die zweite Ausführungsvariante gemäß den Figuren 5 bis 9 anlehnt. Im Folgenden soll auf die Unterschiede zu dieser zweiten Ausführungsvariante eingegangen werden.

Der Antreiber 16 gemäß der dritten Ausführungsvariante ist ähnlich dem Antreiber der zweiten Ausführungsvariante ausgeführt, wobei jedoch das Außengewinde 22 in axialer Richtung weiter nach links verlagert ist. Die wesentlichen Unterschiede liegen in der Ausbildung des Adapters 26 sowie in der Anbringung eines zusätzlichen Montagerings 70.

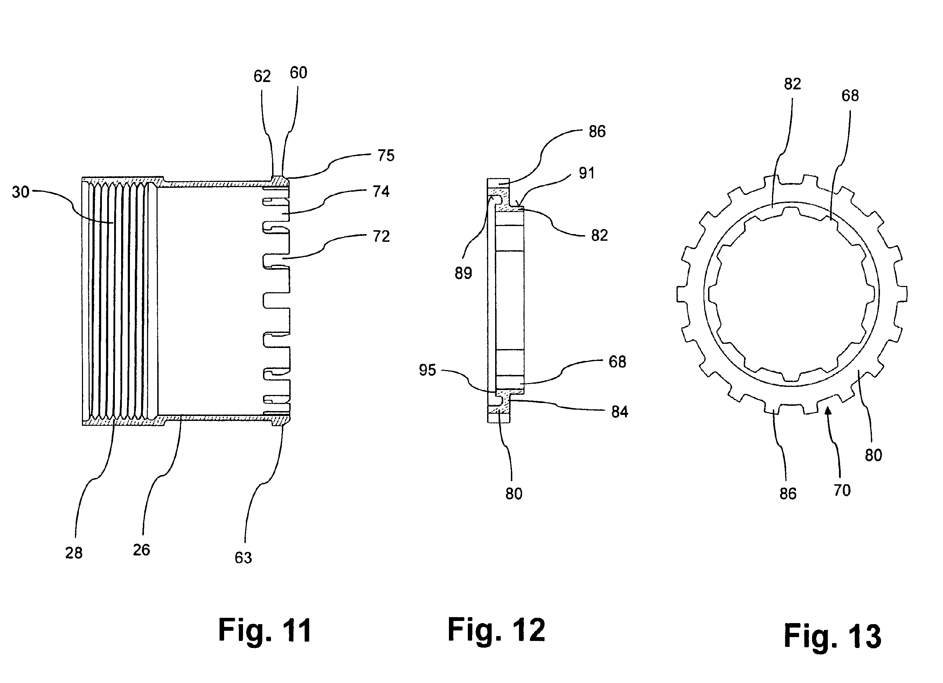

Der Adapter 26 besitzt wiederum ein Innengewinde 30 in seinem Bereich 28. Er ist rohrförmig und nur mit geringen Durchmesserunterschieden ausgebildet. An seinem in Figur 11 rechten Ende besitzt er einen umlaufenden Vorsprung 60 mit einer Anlagefläche 62 und einer umlaufenden Fase 63. Man erkennt in Figur 11, dass der Adapter 26 an seinem axialen Ende mit einer Vielzahl von axialen Schlitzen 72 versehen ist, die den Adapter 26 über den umlaufenden Vorsprung 60 hinaus radial durchbrechen, und so einzelne Rastlaschen 74 schaffen. Durch die axialen Schlitze 72 können die Rastlaschen 74 elastisch radial einwärts federn. Die Rastlaschen 74 sind mit einer umlaufenden Fase 75 versehen, um den Rastvorgang zu erleichtern.

Figuren 12 und 13 zeigen den Montagering 70. Dieser weist zwei ringartige Abschnitte 80 und 82 auf, die über einen Verbindungsabschnitt 84 miteinander verbunden sind. Der äußere Ringabschnitt 80 besitzt eine Außenverzahnung 86 mit radial vorstehenden Vorsprüngen 86 an seinem Außenumfang. Die Anzahl und die Dimensionierung der Vorsprünge 86 sowie deren Anordnung ist genau auf die der Schlitze 72 im Adapter 26 abgestimmt, so dass sich der Montagering 70 derart in den Adapter 26 einstecken lässt, dass die Vorsprünge 86 mehr oder weniger passgenau in die Schlitze 72 eingreifen. Allerdings ergibt sich zwischen dem Montagering 70 und der Innenumfangsfläche der Laschen 74 ein Radialspiel 88 (siehe Figur 10), um zu gewährleisten, dass die Laschen 74 radial einwärts federn können. An der Innenumfangsfläche besitzt der Montagering 70 eine Verzahnung 68, wie sie bereits mit Bezug auf Figur 5 erläutert wurde.

Die Innenumfangsfläche 89 des äußeren Ringsabschnitts 80 ist als Passfläche ausgebildet, die zur radialen Positionierung des Montagerings 70 relativ zum Antreiber vorgesehen ist. Sie sitzt passgenau auf der Außenumfangsfläche 25 am Abschnitt 20 des Antreibers 16 auf.

Der innere Ringabschnitt 82 des Montagerings 70 ist mit einer Passfläche 91 versehen, die positionierend mit einer Innenumfangsfläche 93 an der Ritzelbaugruppe 12 zur radialen Positionierung zusammenwirkt. Außerdem ist am inneren Ringsabschnitt 82 noch eine Anschlagfläche 95 vorgesehen, die zur axialen Positionierung der Ritzelbaugruppe relativ zum Antreiber dient. Diese wirkt mit einer korrespondierenden Stirnfläche 97 des Antreibers 16 zusammen.

Die Montage dieser dritten Ausführungsform erfolgt ähnlich zu der gemäß der zweiten Ausführungsform. Zunächst wird der Adapter 26 auf den Antreiber 16 aufgeschraubt. Anschließend wird der Montagering 70 in den Adapter 26 eingesteckt, so dass die Vorsprünge 86 in die Schlitze 72 eingreifen. Sodann wird die Ritzelbaugruppe 12 aufgesteckt und schließlich mit den Rastlaschen 74 verrastet. Die Fase 63 erleichtert die Positionierung und das Aufstecken. Das Radialspiel zwischen Montagering 70 Rastlaschen 74 lässt eine entsprechende elastische Deformation der Laschen 74 während der Verrastung zu.

Schließlich kann mit einem Montagewerkzeug drehmomentübertragend in die Verzahnung 68 an der Innenumfangsfläche des Montagerings 70 eingegriffen werden, so dass der Montagering 70 und mit diesem der Adapter 26 zum Aufschrauben desselben auf das Außengewinde 30 verdreht werden kann. Dadurch kann die Ritzelbaugruppe 12 in axialer Richtung auf den Antreiber 16 aufgespannt werden, wobei die entsprechenden Axialkräfte über die Wechselwirkung der beiden Flächen 62 und 66 zwischen Adapter 26 und Ritzelbaugruppe 12 erfolgt.

Bei den beiden Ausführungsformen gemäß den Figuren 5 bis 13 ergeben sich gegenüber dem Stand der Technik weitere Vorteile:
- Die Anpresskräfte am kleinen Ritzel über eine zusätzliche Spannmutter können durch die Verrastung vermieden werden.
- Auch die mit der Spannmutter verbundenen weiteren Nachteile, wie zusätzlicher Bauraum oder eine unerwünschte Wechselwirkung mit der Kette oder dem kleinsten Ritzel im Betrieb oder bei der Montage können vermieden werden.
- Die Ritzelbaugruppe kann insbesondere in dem Bereich der Verrastung entsprechend stabil dimensioniert werden, in anderen Bereichen jedoch schwächer und damit gewichtssparender ausgeführt werden.
- Auch lassen sich spezielle positionierende Passflächen zum Antreiber und zur Ritzelbaugruppe für die Zentrierung und Aufnahme von Radiallasten vorsehen.
- Auch der Antreiber lässt sich hinsichtlich seiner Struktur und seines Gewichts gegenüber dem Stand der Technik deutlich verbessern.
- Er weist zur Verspannung ein Außengewinde auf und besitzt ein entsprechendes Mitnahmeprofil zur Drehmomentübertragung auch im Bereich der kleineren Ritzel, was ungünstige Spannungszustände vermeidet.
- Der Anordnung des Lagers innerhalb der Ritzelbaugruppe unterliegt deutlich weniger Einschränkungen.

Insgesamt schaffen sämtliche Ausführungsbeispiele der Erfindung vielfältige Vorteile gegenüber dem Stand der Technik. Die einzelnen Komponenten sind gegenüber dem Stand der Technik deutlich optimiert worden und wirken mit ihren Einzelmerkmalen derart zusammen, dass sich insgesamt ein leichteres, einfacher montierbares und stabiles System ergibt.

## Patentansprüche

1. Mehrfach-Ritzelanordnung (10) mit einer Mehrzahl von Ritzeln (14₁-14₁₀) mit unterschiedlichen Zähnezahlen zur Montage an einer Hinterradachse eines Fahrrads, umfassend
- eine Ritzelbaugruppe (12), an der zumindest ein Teil der Mehrzahl der Ritzel (14₁-14₁₀) vorgesehen ist,
- einen mit der Ritzelbaugruppe (12) drehmomentübertragend verbundenen oder verbindbaren Antreiber (16), der zur Montage auf die Hinterradachse ausgebildet ist,
- einen Adapter (26), der mit dem Antreiber (16) über einen ersten Kopplungsabschnitt (30) verbunden oder verbindbar ist,
**dadurch gekennzeichnet, dass** der Adapter (26) den Antreiber (16) im axialen Bereich wenigstens eines Ritzels der Ritzelbaugruppe umgreift.

2. Mehrfach-Ritzelanordnung (10) nach Anspruch 1,
**dadurch gekennzeichnet, dass** die Ritzelbaugruppe (12) wenigstens ein Ritzel (14₁) umfasst, das einen kleineren Innendurchmesser aufweist, als der Außendurchmesser des Antreibers (16), und wobei das wenigstens eine durchmesserkleine Ritzel (14₁) über den Adapter (26) mit dem Antreiber verbindbar ist,

3. Mehrfach-Ritzelanordnung (10) nach Anspruch 1 oder 2,
**dadurch gekennzeichnet, dass** die Ritzelbaugruppe (12) als zusammenhängende Baugruppe vormontierbar und über den Adapter (26) mit dem Antreiber (16) verspannbar ist, wobei der Adapter (26) über den ersten Kopplungsabschnitt (30) an dem Antreiber (16) anbringbar ist und mit einem zweiten Kopplungsabschnitt (38) ausgebildet ist, mit dem er mit der Ritzelbaugruppe (12) gekoppelt oder koppelbar ist.

4. Mehrfach-Ritzelanordnung (10) nach einem der vorangehenden Ansprüche,
**dadurch gekennzeichnet, dass** der Adapter (26) in Form einer gestuften Rohrhülse mit einem ersten Durchmesserabschnitt (28) mit einem ersten Außendurchmesser und einem zweiten Durchmesserabschnitt (34) mit einem gegenüber dem ersten Außendurchmesser reduzierten zweiten Außendurchmesser ausgebildet ist.

5. Mehrfach-Ritzelanordnung (10) nach einem der vorangehenden Ansprüche,
**dadurch gekennzeichnet, dass** der erste Kopplungsabschnitt (30) des Adapters (26) an dessen erstem Durchmesserabschnitt (28) ausgebildet ist.

6. Mehrfach-Ritzelanordnung (10) nach einem der vorangehenden Ansprüche,
**dadurch gekennzeichnet, dass** der erste Kopplungsabschnitt (30) in Form einer Gewindeformation, vorzugsweise einer Innengewindeformation, ausgebildet ist, die mit einer korrespondierenden Gegengewindeformation (22) am Antreiber in Eingriff bringbar ist.

7. Mehrfach-Ritzelanordnung (10) nach einem der vorangehenden Ansprüche,
**dadurch gekennzeichnet, dass** der Antreiber (16) und der Adapter (26) jeweils eine Anlagefläche (24, 32) aufweisen, die bei gegenseitiger Anlage im montierten Zustand eine vorgegebene Relativposition zwischen Antreiber (16) und Adapter (26) definieren.

8. Mehrfach-Ritzelanordnung (10) nach Anspruch 7,
**dadurch gekennzeichnet, dass** der zweite Kopplungsabschnitt (34) in Form einer Gewindeformation, vorzugsweise einer Außengewindeformation, ausgebildet ist, über die die Ritzelbaugruppe (12) mit dem Adapter (26) verspannbar ist.

9. Mehrfach-Ritzelanordnung (10) nach Anspruch 7 oder 8,
**dadurch gekennzeichnet, dass** der zweite Kopplungsabschnitt (34) am zweiten Durchmesserabschnitt (34) des Adapters (26) angeordnet ist.

10. Mehrfach-Ritzelanordnung (10) nach einem der Ansprüche 1 bis 6,
**dadurch gekennzeichnet, dass** der zweite Kopplungsabschnitt (60) in Form wenigstens eines Haltevorsprungs ausgebildet ist, der in Eingriff mit einer korrespondierenden Halteformation (64) an der Ritzelbaugruppe (12) bringbar ist.

11. Mehrfach-Ritzelanordnung (10) nach Anspruch 10,
**dadurch gekennzeichnet, dass** der Haltevorsprung an einem axialen Ende des Adapters (26) angeordnet ist, wobei der Adapter (26) an diesem axialen Ende zur Ausbildung von Rastlaschen (74) mehrfach axial geschlitzt ist.

12. Mehrfach-Ritzelanordnung (10) nach Anspruch 11,
**dadurch gekennzeichnet, dass** die Rastlaschen (74) zum Einrasten in die Halteformation (64), vorzugsweise mit einer Einlaufschräge, ausgebildet sind.

13. Mehrfach-Ritzelanordnung (10) nach einem der Ansprüche 10 bis 12,
**dadurch gekennzeichnet, dass** die Ritzelbaugruppe (12) und der Adapter (26) jeweils eine Anlagefläche (62, 66) aufweisen, die bei gegenseitiger Anlage im montierten Zustand eine vorgegebene Relativposition zwischen Ritzelbaugruppe (12) und Adapter (26) definieren.

14. Mehrfach-Ritzelanordnung (10) nach einem der vorangehenden Ansprüche,
**dadurch gekennzeichnet, dass** der Adapter (26) eine Angriffsformation (68, 72) aufweist, die zum Übertragen eines Drehmoments zu Montagezwecken ausgebildet ist.

15. Mehrfach-Ritzelanordnung (10) nach Anspruch 14,
**dadurch gekennzeichnet, dass** die Angriffsformation unmittelbar am Adapter (26) oder an einem mit dem Adapter (26) drehmomentübertragend koppelbaren Montagering (70) vorgesehen ist.

16. Mehrfach-Ritzelanordnung (10) nach Anspruch 15,
**dadurch gekennzeichnet, dass** der Montagering mit radialen Vorsprüngen versehen ist, die drehmomentübertragend in die Axialschlitze zwischen die Rastlaschen eingreifen.

17. Mehrfach-Ritzelanordnung (10) nach Anspruch 15,
**dadurch gekennzeichnet, dass** der Montagering mit Anlageflächen zum radialen und/oder axialen Positionieren der Ritzelbaugruppe (12) relativ zum Antreiber versehen ist.

18. Mehrfach-Ritzelanordnung (10) nach einem der vorangehenden Ansprüche,
**dadurch gekennzeichnet, dass** die Ritzelbaugruppe (12) mit einem Stützring (54) versehen ist, der zur Drehmomentübertragung zwischen der Ritzelbaugruppe (12) und dem Antreiber (16) drehmomentübertragend mit dem Antreiber (16) gekoppelt ist.

19. Mehrfach-Ritzelanordnung (10) nach Anspruch 18,
**gekennzeichnet durch** ein rohrförmiges Spannelement (50), das als axialer Anschlag zwischen dem Stützring der Ritzelbaugruppe (12) und dem Adapter (26) oder/und der Ritzelbaugruppe (12) ausgebildet ist.

20. Mehrfach-Ritzelanordnung nach dem Oberbegriff von Anspruch 1,
**dadurch gekennzeichnet, dass** der Adapter wenigstens ein in dem Antreiber aufgenommenes Lager umgreift.

21. Adapter (26) zum Anbringen einer Ritzelbaugruppe (12) an einem Antreiber (16) einer Mehrfach-Ritzelanordnung (10) nach einem der vorangehenden Ansprüche, wobei der Adapter (26) mit einem ersten Kopplungsabschnitt (28) ausgebildet ist, über den er an dem Antreiber (16) anbringbar ist, und mit einem zweiten Kopplungsabschnitt (34) ausgebildet ist, mit dem er mit der Ritzelbaugruppe (12) gekoppelt oder koppelbar ist.

22. Adapter (26) nach Anspruch 21,
**dadurch gekennzeichnet, dass** der erste Kopplungsabschnitt (28) in Form einer Gewindeformation, vorzugsweise einer Innengewindeformation ausgebildet ist, die mit einer korrespondierenden Gegengewindeformation (20) am Antreiber (16) in Eingriff bringbar ist.

23. Adapter (26) nach Anspruch 21 oder 22,
**dadurch gekennzeichnet, dass** der zweite Kopplungsabschnitt (38) in Form einer Gewindeformation, vorzugsweise einer Außengewindeformation, ausgebildet ist, über die Ritzelbaugruppe (12) mit dem Adapter (26) verspannbar ist.

24. Adapter (26) nach Anspruch 21 oder 22,
**dadurch gekennzeichnet, dass** der zweite Kopplungsabschnitt (60) in Form wenigstens eines Haltevorsprungs ausgebildet ist, der in Eingriff mit einer korrespondierenden Halteformation (66) an der Ritzelbaugruppe (12) bringbar ist.

25. Adapter (26) nach Anspruch 24,
**dadurch gekennzeichnet, dass** der zweite Kopplungsabschnitt an einem mehrfach axial geschlitzten Ende des Adapters (26) ausgebildet ist.

26. Adapter (26) nach einem der Ansprüche 21 bis 25,
**dadurch gekennzeichnet, dass** der Adapter (26) eine Angriffsformation (68) aufweist oder mit einer Angriffsformation drehmomentübertragend gekoppelt ist, die zum drehmomentübertragenden Anbringen eines Montagewerkzeugs ausgebildet ist.

27. Antreiber (16) zum Aufnehmen einer Ritzelbaugruppe (12) einer Mehrfach-Ritzelanordnung (10) nach einem der vorangehenden Ansprüche 1 bis 20, umfassend eine Drehmomentaufnahmeformation zur drehmomentübertragenden Kopplung mit der Ritzelbaugruppe (12), insbesondere mit einem Stützring (54) der Ritzelbaugruppe (12), eine Abtriebsformation zum Übertragen eines Drehmoments auf eine Nabenanordnung einer Hinterradachse eines Fahrrads sowie einen Aufnahmeabschnitt zum drehmomentübertragenden Aufnehmen der Ritzelbaugruppe (12), wobei der Antreiber mit einer Gegengewindeformation (30) ausgebildet ist, auf die ein Adapter (26) nach einem der Ansprüche 21 bis 26 mit einer korrespondierenden Gewindeformation (28) aufschraubbar ist.

28. Hinterrad-Achsanordnung für ein Fahrrad mit
- einer Hinterradachse, die zur Befestigung an einem Fahrradrahmen ausgebildet ist,
- einen auf der Hinterachse drehbar gelagerten Nabenkörper,
- eine mit einer Antriebskette zusammenwirkenden Mehrfach-Ritzelanordnung (12) nach einem der Ansprüche 1 bis 20, und
- eine Drehmomentübertragungsanordnung zum richtungsselektiven Übertragen eines Drehmoments von der Mehrfach-Ritzelanordnung zu dem Nabenkörper, um den Nabenkörper anzutreiben.
